# EUROPÄISCHE PATENTANMELDUNG

(11) **EP 1 154 668 A2**
(43) Veröffentlichungstag der Anmeldung: **14.11.2001**
(21) Anmeldenummer: 01109259.0
(22) Anmeldetag: 14.04.2001
(51) Int. Cl.: H04Q 9/00

(54) **System und Verfahren zur Auslesung und Abrechnung von Verbrauchswerten**

(30) Priorität: 11.05.2000 DE 10023198
(71) Anmelder: Techem Service Aktiengesellschaft & Co. KG, 60525 Frankfurt am Main (DE)
(72) Erfinder: Schäfer, Hans-Lothar, 35794 Mengerskirchen (DE)
(74) Vertreter: KEIL & SCHAAFHAUSEN

(57) **Zusammenfassung**

Ein System zur Auslesung und Abrechnung von Verbrauchswerten einer Liegenschaft weist wenigstens eine Messstelle zur Erfassung von Verbrauchswerten der Liegenschaft, wenigstens einen Datensammler zum Zusammenführen der erfassten Verbrauchswerte, eine Speichereinrichtung zum Speichern der in den Datensammlern gesammelten Daten und ein Benutzerterminal, das mit einem externen Datennetz, insbesondere dem Internet verbindbar ist, auf. Damit der Eigentümer oder Verwalter der Liegenschaft selbst eine Verbrauchsabrechnung erstellen kann, ist in dem externen Datennetz eine Programmanwendung zum Erstellen einer Verbrauchsabrechnung verfügbar, die ein Modul zum Zugriff auf die Verbrauchswerte in der Datenspeichereinrichtung und ein Modul zur Eingabe von Sekundärdaten, wie Kosten- oder Mieterdaten aufweist, und die von dem Benutzer am Benutzerterminal bedienbar ist.

## Beschreibung

Die Erfindung bezieht sich auf ein System zur Auslesung und Abrechnung von Verbrauchswerten einer Liegenschaft mit wenigstens einer Messstelle zur Erfassung von Verbrauchswerten der Liegenschaft, mit wenigstens einem Datensammler zum Zusammenführen der erfassten Verbrauchswerte, mit einer Datenspeichereinrichtung zum Speichern der in den Datensammlern gesammelten Daten und mit einem Benutzerterminal, das mit einem externen Datennetz, insbesondere dem Internet, verbindbar ist, sowie auf ein entsprechendes Verfahren.

Für die verbrauchsabhängige Abrechnung von bspw. Wärme- oder Wasserkosten in Wohnungen oder gewerblich genutzten Räumen ist es heute üblich, die Verbrauchswerte einmal jährlich abzulesen. Die abgelesenen Werte werden von Hand notiert, in einem mobilen Computer gespeichert oder per Modem fernausgelesen und einem auf die Abrechnung der Verbrauchswerte spezialisierten Dienstleistungsunternehmen übermittelt. Zusätzlich erhält das Dienstleistungsunternehmen schriftlich oder durch elektronische Datenübermittlung Angaben über die für das Gesamtgebäude anfallenden Wärme- und Wasserkosten sowie Daten zu den einzelnen Mietern des Gebäudes. Die abgelesenen Verbrauchswerte, die Kosten- und die Mieterdaten werden dann zur verbrauchsabhängigen Abrechnung verarbeitet. Insbesondere bei Mietgebäuden, die nicht von Wohnungsgesellschaften oder Hausverwaltungen verwaltet werden, besteht das Problem, dass die Erstellung und Weiterleitung der Daten mit erheblichem manuellen Aufwand verbunden ist.

Aus der EP 0 924 949 A1 ist ein rechnergestütztes Datenerfassungs-, Datenauswertungs- und Kommunikationssystem bekannt, bei dem an einer Messstelle erfasste Verbrauchswerte mittels einer Datenübertragungseinrichtung an eine zentrale Rechnereinheit übermittelt wird, in der ein die Liegenschaft betreffender Datensatz zur Verfügung steht. Der Datensatz enthält den übermittelten aktuellen Verbrauchswert und einen mit diesem in Beziehung setzbaren, vorbestimmten Erwartungswert. Ein Benutzer kann über das Internet oder eine direkte Datenverbindung auf die zentrale Rechnereinheit zugreifen, um Einblick in seinen Datensatz zu nehmen und zu überprüfen, ob sein tatsächlicher Verbrauch dem Erwartungswert entspricht oder diesen über- oder unterschreitet. Das Verbrauchsverhalten kann dann ggf. angepasst werden. Die Datenbasis kann zudem Gebäudestammdaten und Dienstleistungsangebote enthalten, wie Aufstellungen aller Eigentümer des Gebäudes, Verbrauchsabrechnungen, Formulare für Adressenänderungen. So kann ein Benutzer bspw. ein in der Datenbasis bereitgehaltenes Formular aufrufen, auf sein Terminal übertragen lassen, ausfüllen und an die Rechnereinheit zurücksenden, in der die Angaben ausgewertet und ggf. entsprechende Aktionen eingeleitet werden. Ein Vermieter kann die Verbrauchskostenabrechnung jedoch nicht selbst erstellen. Dies erfolgt vielmehr durch ein Dienstleistungsunternehmen und ist dann über das Internet lediglich einsehbar. Außerdem müssen alle zur Erstellung der Abrechnung notwendigen Daten, wie Mieterdaten und Verbrauchskosten, in der Datenbasis gespeichert und verwaltet werden, womit für das Dienstleistungsunternehmen ein beträchtlicher Aufwand verbunden ist.

Aus der EP 0 884 569 A1 und der DE 297 19 851 U1 sind Vorrichtungen zur Verbrauchsermittlung bekannt, bei denen die Verbrauchsdaten mittels einer Chipkarte ausgelesen und abgespeichert werden. Diese Chipkarten werden dann entweder direkt der Abrechnungszentrale zugesandt oder in eine geeignete Lesevorrichtung eingeführt, die die auf der Chipkarte gespeicherten Daten bspw. über ein Telefonnetz zu der Abrechnungszentrale übermittelt. Auch hierbei hat der Vermieter keinen Einfluss auf die Erstellung der Verbrauchskostenabrechnung.

Daher ist es Aufgabe der vorliegenden Erfindung, ein System zur Auslesung und Abrechnung von Verbrauchswerten der eingangs genannten Art vorzuschlagen, das einfach handhabbar ist und dem Benutzer eine hohe Flexibilität bei der Erstellung von Abrechnungen ermöglicht.

Diese Aufgabe wird mit der Erfindung im Wesentlichen dadurch gelöst, dass in dem externen Datennetz eine Programmanwendung zum Erstellen einer Verbrauchsabrechnung verfügbar ist, dass die Programmanwendung ein Modul zum Zugriff auf die Verbrauchswerte in der Datenspeichereinrichtung und ein Modul zur Eingabe von Sekundärdaten, wie Kosten- oder Mieterdaten aufweist und dass die Programmanwendung von dem Benutzer am Benutzerterminal bedienbar ist.

Mit dem erfindungsgemäßen System kann der gesamte Prozess der Datenerhebung und -verarbeitung durch den Eigentümer oder Verwalter eines Mietgebäudes ausgeführt werden, ohne dass ein Eingriff durch ein mit dem Ablesen oder Auswerten von Verbrauchswerten beauftragtes Dienstleistungsunternehmen erforderlich ist. Die von Messwertfühlern an verschiedenen Messstellen erfassten Verbrauchswerte, die in den Datensammlern zusammengeführt und den Datenspeichereinrichtungen zwischengespeichert werden, können von dem Eigentümer oder Verwalter mit Hilfe der Programmanwendung zu jeder Zeit direkt verarbeitet und abgerechnet werden. Da derartige Programme nach dem Aufruf im Internet lokal auf dem Benutzerterminal, bspw. einem PC mit Internet-Anschluss, ausgeführt werden, können die Kosten- und Mieterdaten lokal an dem Benutzerterminal eingegeben werden. Durch übliche Verschlüsselungsverfahren sind die Mieterdaten zuverlässig vor einem unberechtigten Zugriff Dritter geschützt. Zudem steht dem Eigentümer oder Verwalter die Kostenabrechnung sofort nach Ausführen des Programms zur Verfügung, ohne dass er auf eine Bearbeitung durch ein Dienstleistungsunternehmen warten muss.

Erfindungsgemäß werden die Daten über eine Modemverbindung von den Datensammlern an die Datenspeichereinrichtung übertragen, auf die die Programmanwendung zugreifen kann. Eine Übertragung ist mindestens einmal pro Jahr vorgesehen. Die Datenspeichereinrichtung kann hierbei in das Benutzerterminal integriert sein, das dann die zentrale Rechnereinheit bildet. Auf diese Weise werden die Verbrauchsdaten direkt bei dem Eigentümer oder Verwalter abgespeichert, so dass sie diesem jederzeit zur Verfügung stehen, ohne dass über ein Datennetz auf einen zentralen Rechner zugegriffen werden muss.

In einer anderen Ausgestaltung der Erfindung ist die Datenspeichereinrichtung eine transportable Speichereinrichtung wie eine Chipkarte. Wenigstens ein Datensammler weist dann eine Kommunikationsschnittstelle zum Beschreiben der Chipkarte auf. Auf das Versenden von Daten mittels Modem und/oder externem Datennetz kann verzichtet werden. Der Eigentümer oder Verwalter einer Wohnung geht bspw. einmal im Jahr mit der Chipkarte in das Gebäude und liest die Datensammler aus, oder ein Mieter liest die Verbrauchswerte auf die Chipkarte aus und überlässt dem Eigentümer oder Verwalter die Chipkarte mit den zwischengespeicherten Werten.

Es kann vorgesehen sein, dass die Programmanwendung aus dem externen Datennetz auf das Benutzerterminal herunterladbar ist, so dass sie nach einer Abspeicherung dort permanent zur Verfügung steht. Dann kann die gesamte Verbrauchsabrechnung ohne Zugriff auf das externe Datennetz durchgeführt werden, wenn die Verbrauchsdaten entweder auf Chipkarten oder im Benutzerterminal selbst zwischengespeichert sind. Ein Internetaufruf ist nur noch für ein Programm-Update notwendig.

Vorzugsweise ist das Modul zum Zugriff auf die Verbrauchswerte in der Programmanwendung von dem Benutzer für verschiedene Datenspeichereinrichtungen konfigurierbar.

Ferner bezieht sich die Erfindung auf ein Verfahren zur Auslesung und Abrechnung von Verbrauchswerte einer Liegenschaft, bei dem die an wenigstens einer Messstelle erfassten Verbrauchswerte zusammengeführt und in bestimmten Zeitabständen zu einer Datenspeichereinrichtung übertragen werden. Eine in einem externen Datennetz, insbesondere dem Internet verfügbare Programmanwendung ist zum Erstellen einer Verbrauchsabrechnung durch einen Benutzer von einem Benutzerterminal ausführbar, wobei die Programmanwendung eine Verbindung zu der Datenspeichereinrichtung aufbaut, um die benötigten Verbrauchsdaten einzulesen, wobei der Benutzer zur Erstellung der Abrechnung benötigte Sekundärdaten, wie Kosten- oder Mieterdaten eingibt und wobei die Programmanwendung die Abrechnung der Verbrauchswerte erstellt und dem Benutzer am Benutzerterminal zur Verfügung stellt.

Bei diesem Verfahren überprüft die Programmanwendung eingegebene Sekundärdaten vorzugsweise auf Plausibilität.

Um für zukünftige Abrechnungen die Eingabe gleichbleibender Daten zu sparen, sieht das erfindungsgemäße Verfahren vor, dass die Programmanwendung Parameterdateien mit eine Abrechnungseinheit betreffenden Sekundärdaten beispielsweise auf dem Benutzerterminal abspeichert. Diese Daten können dann bei der nächsten Abrechnung von der Programmanwendung eingelesen werden, ohne dass ein erneute Eingabe erforderlich ist.

Das Verfahren läßt sich besonders vorteilhaft mit dem oben beschriebenen System zur Auslesung und Abrechnung der Verbrauchswerte durchführen.

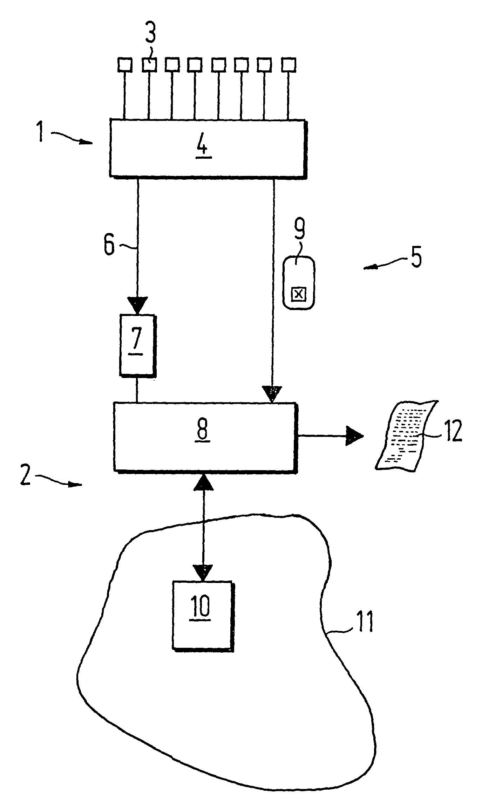

Die Erfindung wird nachfolgend anhand von Ausführungsbeispielen und der Zeichnung näher beschrieben.

Dabei zeigt die einzige Zeichnung schematisch den Aufbau des erfindungsgemäßen Systems zur Auslesung und Ablesung von Verbrauchswerten.

In einem ersten Bereich 1 des Systems werden die erfassten Verbrauchswerte zusammengeführt und zwischengespeichert, um anschließend in einem zweiten Bereich 2 des Systems weiterverarbeitet und beispielsweise abgerechnet zu werden.

Der erste Bereich 1 umfasst eine Vielzahl von Messstellen 3, die charakteristische Verbrauchswerte einer Liegenschaft, wie Wasser- oder Wärmeverbrauch, erfassen und die zum Zusammenführen der erfassten Verbrauchswerte mit einem Datensammler 4 verbunden sind. Diese Verbindung kann entweder drahtgebunden sein oder mittels Funk hergestellt werden. Hierzu weisen die Messstellen 3 ggf. entsprechende Funksender und der Datensammler 4 einen entsprechenden Funkempfänger auf. Besonders in größeren Häusern können mehrere Datensammler 4 - etwa einer für jede Wohnung - vorgesehen werden, die miteinander kommunizieren können und vorzugsweise einem zentralen Datensammler 4 alle Verbrauchswerte übertragen.

Die Verbrauchswerte werden in einer Datenspeichereinrichtung 5 zwischengespeichert, um sie in regelmäßigen Abständen, jedoch mindestens einmal jährlich auszulesen. Dazu steht der Datensammler 4 bei einer Ausführungsform über eine Modemverbindung 6 eines Festnetzes oder eines GSM-Netzes mit einer beispielsweise zentralen Rechnereinheit 7 in Verbindung, auf der die Verbrauchswerte abgespeichert werden. Die Rechnereinheit 7 ist mit einem Benutzerterminal 8 verbunden oder darin integriert. Es ist aber auch denkbar, die Rechnereinheit 7 separat zu betreiben und über eine weitere Modemverbindung 6 oder dgl. mit dem Benutzerterminal 8 zu verbinden.

Eine alternative Möglichkeit zur Zwischenspeicherung der Verbrauchswerte besteht darin, jeweils an dem Datensammler 4 und dem Benutzerterminal 8 nicht dargestellte Chipkartenschnittstellen vorzusehen, in die eine Chipkarte 9 einführbar ist. In dem Datensammler 4 werden die Verbrauchsdaten auf die Chipkarte 9 geschrieben und in dem Benutzerterminal 8 ausgelesen. Ebenso ist ein Einsatz von "SmartCards" zum Zwischenspeichern der Verbrauchswerte möglich.

Der zweite Bereich 2 des Systems weist das Benutzerterminal 8 auf, von dem aus auf die in der Speichereinrichtung 5 zwischengespeicherten Verbrauchswerte zugegriffen werden kann. Das Benutzerterminal 8 steht beispielsweise bei dem Eigentümer oder Verwalter der Liegenschaft, um ihm die Möglichkeit zu geben, selbständig eine Verbrauchsdatenabrechnung zu erstellen. Dazu kann von dem Benutzerterminal 8 aus auf eine Programmanwendung 10 zum Erstellen einer Verbrauchsabrechnung zugegriffen werden, die in einem externen Datennetz 11, beispielsweise dem Internet, zur Verfügung steht und als Internetanwendung in einer gängigen Programmiersprache, beispielsweise Java-Script oder dergleichen, abgefasst ist.

Nach dem Aufruf der Programmanwendung 10 im externen Datennetz 11 werden zur Programmausführung notwendige Programmteile in einem zentralen Rechner (Web-Server) ausgeführt und/oder auf das Benutzerterminal 8 geladen und auf diesem ausgeführt. Insbesondere zählen dazu ein Modul zum Zugriff auf die Verbrauchswerte in der Datenspeichereinrichtung 5 und ein Modul zur Eingabe von Sekundärdaten, wie Kostendaten, Mieterdaten oder dgl..

Das Modul zum Einlesen der Verbrauchswerte kann von dem Benutzer auf verschiedene Datenspeichereinrichtungen 5, wie die Rechnereinheit 7, die Chipkarte 9 oder dgl., eingestellt werden. Nach der Konfiguration greift das Modul während des Programmablaufs selbsttätig auf die zwischengespeicherten Verbrauchswerte zu.

Das Modul zur Eingabe von Sekundärdaten fordert den Benutzer auf, die zur Abrechnung notwendigen Angaben in dafür vorgesehene Datenfelder einzugeben. Nach der Eingabe findet eine Plausibilitätsprüfung statt, die überprüft, ob die Daten vollständig sind oder ob sich offensichtliche Fehler aufweist. Eine vollständige Eingabe liegt vor, wenn alle als obligatorische Eingabefelder bezeichneten Felder nach der Eingabe tatsächlich Eingabewerte aufweisen. Außerdem kann eine einfache Kontrolle dahingehend stattfinden, ob Zahlen oder Buchstaben an den jeweils richtigen Stellen eingegeben wurden.

Um eine richtige Zuordnung der Verbrauchswerte zu den Sekundärdaten sicherzustellen, kann den Verbrauchswerten einer Abrechnungseinheit eine Kennung zugeordnet sein, die bei der Erstellung einer Abrechnung angegeben werden muß, um eine richtige Zuordnung der Verbrauchswerte zur Abrechnungseinheit sicherzustellen und einfache Verwechslungen zu vermeiden.

Nach der vollständigen Eingabe der Daten greift die Programmanwendung auf die zwischengespeicherten Verbrauchswerte zu und erzeugt eine Verbrauchsabrechnung, die von dem Benutzer ausgedruckt werden kann. Ferner kann die Programmanwendung statistische Informationen über den Verbrauch und/oder die Verbrauchsentwicklung in den letzten Jahren bestimmen und dem Benutzer zur Verfügung stellen.

Mit dem vorgeschlagenen System zur Auslesung und Abrechnung von Verbrauchswerten erfasst der Gebäudeeigentümer oder Verwalter alle erforderlichen Daten und erstellt mit der Programmanwendung eine fertige Abrechnung, die direkt oder auf Wunsch auch von einem Dienstleistungsunternehmen, zu dem sie bspw. mittels Internet übertragen wird, gedruckt und versandt werden kann.

### Bezugszeichenliste:

- 1: erster Systembereich
- 2: zweiter Systembereich
- 3: Messstellen
- 4: Datensammler
- 5: Datenspeichereinrichtung
- 6: Modemverbindung
- 7: Rechnereinheit
- 8: Benutzerterminal
- 9: Chipkarte
- 10: Programmanwendung
- 11: externes Datennetz
- 12: Verbrauchsabrechnung

## Patentansprüche

1. System zur Auslesung und Abrechnung von Verbrauchswerten einer Liegenschaft, mit wenigstens einer Messstelle (3) zur Erfassung von Verbrauchswerten der Liegenschaft, mit wenigstens einem Datensammler (4) zum Zusammenführen der erfassten Verbrauchswerte, mit einer Speichereinrichtung (5, 9) zum Speichern der in den Datensammlern (4) gesammelten Daten und mit einem Benutzerterminal (8), das mit einem externen Datennetz (11), insbesondere dem Internet, verbindbar ist, **dadurch gekennzeichnet, dass** in dem externen Datennetz (11) eine Programmanwendung (10) zum Erstellen einer Verbrauchsabrechnung (12) verfügbar ist, dass die Programmanwendung (10) ein Modul zum Zugriff auf die Verbrauchswerte in der Datenspeichereinrichtung (5, 9) und ein Modul zur Eingabe von Sekundärdaten, wie Kosten- oder Mieterdaten aufweist, und dass die Programmanwendung (10) von dem Benutzer am Benutzerterminal (8) bedienbar ist.

2. System nach Anspruch 1, **dadurch gekennzeichnet, dass** wenigstens ein Datensammler (4) ein Modem (6) oder dgl. zur Übermittlung der Verbrauchswerte an die Datenspeichereinrichtung (5) aufweist.

3. System nach Anspruch 1 oder 2, **dadurch gekennzeichnet, dass** die Datenspeichereinrichtung (5) in das Benutzerterminal (8) integriert ist.

4. System nach Anspruch 1, **dadurch gekennzeichnet, dass** wenigstens ein Datensammler (4) eine Schnittstelle zum Beschreiben einer transportablen Speichereinrichtung, insbesondere einer Chipkarte (9), aufweist.

5. System nach einem der vorhergehenden Ansprüche, **dadurch gekennzeichnet, dass** die Programmanwendung (10) aus dem externen Datennetz (11) auf das Benutzerterminal (8) herunterladbar ist.

6. System nach einem der vorhergehenden Ansprüche, **dadurch gekennzeichnet, dass** das Modul zum Zugriff auf die Verbrauchswerte von dem Benutzer für die verschiedenen Datenspeichereinrichtungen (5, 9) konfigurierbar ist.

7. Verfahren zur Auslesung und Abrechnung von Verbrauchswerten einer Liegenschaft, bei dem die am wenigstens einer Messstelle (3) erfassten Verbrauchswerte zusammenführt und in bestimmten Zeitabständen zu einer Datenspeichereinrichtung (5, 9) übertragen werden, **dadurch gekennzeichnet, dass** eine in einem externen Datennetz (11), insbesondere dem Internet, verfügbare Programmanwendung (10) zum Erstellen einer Verbrauchsabrechnung durch einen Benutzer von einem Benutzerterminal (8) ausführbar ist, wobei die Programmanwendung (10) eine Verbindung zu der Datenspeichereinrichtung (5, 9) aufbaut, um die benötigten Verbrauchsdaten einzulesen, wobei der Benutzer zur Erstellung der Abrechnung benötigte Sekundärdaten, wie Kosten- oder Mieterdaten, eingibt und wobei die Programmanwendung (10) die Abrechnung der Verbrauchswerte erstellt und dem Benutzer am Benutzerterminal (8) zur Verfügung stellt.

8. Verfahren nach Anspruch 7, **dadurch gekennzeichnet, dass** mit Hilfe der Programmanwendung (10) die eingegebenen Sekundärdaten auf Plausibilität überprüft werden.

9. Verfahren nach Anspruch 7 oder 8, **dadurch gekennzeichnet, dass** auf dem Benutzerterminal (8) Parameterdateien mit eine Abrechnungseinheit betreffenden Sekundärdaten gespeichert werden.
